(19) Europäisches Patentamt
European Patent Office
Office européen des brevets

(11) **EP 3 389 206 B1**

(12) **EUROPEAN PATENT SPECIFICATION**

(45) Date of publication and mention
of the grant of the patent:
**04.03.2020 Bulletin 2020/10**

(51) Int Cl.:
*H04L 1/18* (2006.01)     *H04L 1/20* (2006.01)

(21) Application number: **17166689.4**

(22) Date of filing: **14.04.2017**

(54) **MULTIPATH ERROR CORRECTION**

MEHRWEGFEHLERKORREKTUR

CORRECTION D'ERREUR DE MULTITRAJETS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.10.2018 Bulletin 2018/42**

(73) Proprietor: **Nokia Solutions and Networks Oy 02610 Espoo (FI)**

(72) Inventors:
• **KUCERA, Stepan**
  **Dublin, 15 (IE)**
• **CLAUSSEN, Holger**
  **Dublin, 15 (IE)**
• **FERLIN OLIVEIRA, Simone**
  **0579 Oslo (NO)**

(74) Representative: **Bryers LLP**
**7 Gay Street**
**Bath, Bath and North East Somerset BA1 2PH (GB)**

(56) References cited:
**EP-A1- 1 708 400      US-A1- 2014 341 023
US-A1- 2017 012 868**

• **OMESH TICKOO ET AL: "LT-TCP: End-to-End Framework to Improve TCP Performance over Networks with Lossy Channels", 4 June 2005 (2005-06-04), QUALITY OF SERVICE - IWQOS 2005; [LECTURE NOTES IN COMPUTER SCIENCE;;LNCS], SPRINGER-VERLAG, BERLIN/HEIDELBERG, PAGE(S) 81 - 93, XP019011134, ISBN: 978-3-540-26294-7 * the whole document ***

**Description**

TECHNICAL FIELD

Aspects relate, in general, to a method and a system for error correction in a multipath session.

BACKGROUND

Multi-path connectivity, such as multi-path TCP (MPTCP), is a method for increasing the throughput of an end-to-end connection by spreading packet transmissions over parallel data paths. The method can be particularly beneficial to applications with clients running in a mobile wireless device because it allows the device to aggregate the capacity of multiple wireless interfaces.
US 2014/0341023 A1 relates to a method and apparatus for transmitting and receiving data packets in a wireless communication system, where determination of the number of first data packets to be transmitted is based on buffer status information and determination of the number of second data packets to be transmitted is based on a data packet loss rate for each of a plurality of paths.

SUMMARY

According to an example, there is provided a method, in a multipath TCP session, comprising for every N multipath TCP packets to be transmitted as part of the session, generating an error correction packet using payload data and control information of the N multipath TCP packets, transmitting the generated error correction packet along with the N multipath TCP packets, modifying an error correction overhead ratio, representing the ratio of error correction packets to N, according to an average payload packet loss rate, generating an average payload packet loss rate over a predetermined time interval using measures of the total transmitted payload packets and the total retransmitted payload packets over the interval, and comparing the average payload packet loss rate to a predetermined threshold value, wherein the error correction overhead ratio is modified to reduce the ratio when the average payload packet loss rate is greater than the threshold value or to increase the ratio when the average payload packet loss rate is less than the threshold value. An error correction packet can be transmitted as part of a session congestion window. The method can further comprise receiving, at a sending apparatus, an acknowledgement of out-of-order packets when N out-of-order packets are received at a receiver. The method can further comprise, at a sending apparatus, modifying a session congestion window, based on a number of received error correction packets and payload packet acknowledgements.
According to an example, there is provided a method a system comprising a sending apparatus to generate an error correction packet using payload data and control information of N multipath TCP packets to be transmitted from the sending apparatus as part of a multipath TCP session, wherein the sending apparatus is configured to transmit the generated error correction packet as part of a session congestion window along with the N multipath TCP packets, modify an error correction overhead ratio (101 103), representing the ratio of error correction packets to N, according to an average payload packet loss rate, generate an average payload packet loss rate over a predetermined time interval using measures of the total transmitted payload packets and the total retransmitted payload packets over the interval, and compare the average payload packet loss rate to a predetermined threshold value, wherein the error correction overhead ratio is modified to reduce the ratio when the average payload packet loss rate is greater than the threshold value or to increase the ratio when the average payload packet loss rate is less than the threshold value. The sending apparatus can receive an acknowledgement of out-of-order packets when N out-of-order packets are received at a receiver. The sending apparatus can modify a session congestion window, based on a number of received error correction packets and payload packet acknowledgements.
According to an example, there is provided a computer program product, comprising instructions which, when the program is executed by a computer, causes the computer to carry out a method as provided herein.

BRIEF DESCRIPTION OF THE DRAWINGS

Embodiments will now be described, by way of example only, with reference to the accompanying drawings, in which:

   Figure 1 is a schematic representation of an FEC overhead ratio according to an example;
   Figure 2 is a schematic representation of a system according to an example; and
   Figure 3 is a set of graphs showing latency and throughput improvements according to an example.

DESCRIPTION

Example embodiments are described below in sufficient detail to enable those of ordinary skill in the art to embody and implement the systems and processes herein described. Throughout the description any references to embodiments which do not fall within the scope of the claims are to be regarded as related examples useful for understanding the invention.

Accordingly, while embodiments can be modified in various ways and take on various alternative forms, specific embodiments thereof are shown in the drawings and described in detail below as examples. There is no intent to limit to the particular forms disclosed. On the contrary, all modifications, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Interactive applications, such as interactive mobile applications for example, present stringent requirements for both large throughput and small packet latency at quantitative levels that cannot be met by existing mobile broadband access technologies such as 3G HSPA and 4G LTE.

When the transport control protocol (TCP) and the Internet Protocol (IP) were specified, end-hosts were typically connected to the Internet via a single network interface, and TCP was built around the notion of a single connection between them. Nowadays, with mobile devices often accommodating multiple radio wireless technologies, e.g., cellular and WLAN, the picture is rather different.

Standard TCP is not able to efficiently explore the multi-connected infrastructure as it ties applications to specific source and destination IP addresses. MPTCP emerged to close this gap, by allowing the use of multiple network paths for a single data stream simultaneously, providing potential for higher application overall throughput and resilience. However, having to take operability and deployment into account, MPTCP was designed to look like regular TCP from a network's perspective.

Although MPTCP enables better use of network resources, scenarios with heterogeneous networks paths, such as those offered by cellular and WLAN, remain challenging. Heterogeneity results in packet reordering, leading to Head-Of-Line (HoL) blocking, increased out-of-order (OFO) buffer and, ultimately, reduced overall throughput, making MPTCP at times perform worse than TCP.

Some MPTCP-specific elements, such as the scheduler, can be used to enhance multipath performance with heterogeneity, but some of MPTCP's challenges are rooted in TCP itself, where TCP's performance in certain scenarios, e.g., wireless, high delay or lossy networks, is suboptimal.

More specifically, in TCP, one of the main limiting factors is the loss recovery time, with its legacy loss detection and recovery mechanisms being tied to time: A Retransmission Timeout (RTO) after a timer expires, or Fast Retransmission (FR) after three duplicated acknowledgements (DupACK) from the receiver to detect a loss, and at least one extra Round Trip Time (RTT) for a retransmission to perform. In light of multipath, MPTCP subflows using different technologies with distinct delay and loss profiles can cause one of the subflows to stall the multipath connection by waiting for a retransmission to occur. For example, consider WLAN with (typically) 20 to 30ms RTT and a cellular network with (typical) 50 to 85ms RTT.

Replacement of TCP by UDP is sometimes used, in particular when applications require some interactivity and are latency-sensitive, e.g., video streaming. MPTCP is not a candidate for a transport protocol in such cases.

TCP loss recovery, such as Fast Recovery (FR) and Retransmission Timeout (RTO), is tied to RTT. Thus, regardless of how network capacity grows, the required RTTs to recover from loss remain the same. In this context, forward-error correction (FEC) or protocols such as QUIC can be used to improve the reliability of legacy TCP. Nevertheless, current FEC-based solutions to TCP's loss detection and recovery are very basic and driven primarily by niche applications.

For example, TCP-Tail Loss Probe (TLP) focuses on web latency duplicating packets at the flow's tail to avoid RTOs while TCP-Instant Recovery (IR) applies a XOR-based FEC injecting encoded packets within TCP, to provide N+1 redundancy.

FEC is generally used in vain when the link loss rate is low. In addition, XOR-based FEC is disadvantageous if more than one packet per FEC block is lost. That is, a fixed-rate FEC implementation that always reserves congestion window (CWND) space for FEC, but in which the FEC is not used for recovery, wastes link capacity. Hence, since the link loss rate is generally unknown, the FEC rate has to dynamically adjust at run-time.

Even in the presence of multi-path connectivity, in which multiple wireless interfaces of a wireless device aggregated to increase the capacity of the device, the time of delivery of a data object remains defined by the time of delivery of the last byte of the object. Therefore, in order for multi-path connectivity to produce tangible benefits, the delivery of data over the individual paths should occur consistently with the decisions made by a load balancer that is used to distribute packets over the parallel paths. In this case, consistency results from a small difference between actual and expected end-to-end packet latency, which is easiest to achieve by keeping the end-to-end packet latency as small as possible.

According to an example, there is a provided a system and method for operation of a transport layer for mobile data delivery that adjusts throughput and packet latency of an end-to-end transport connection on the basis of the bandwidth available at a network bottleneck, which is compatible with legacy technologies. There can therefore be an improvement in throughput for interactive applications over conventional single-path end-to-end connections, but also an increase in the effectiveness of multi-path connectivity technologies at translating the aggregation of capacity from the parallel data paths into equivalent throughput increases for the applications.

The system and method can be used with throughput-intensive latency-sensitive applications, such as virtual/augmented reality applications, that are characterized by both bandwidth and latency control based on integrated FEC capability, providing receiver-side recovery of lost or delayed payload data without lengthy transmitter-side retransmissions.

According to an example, FEC packets can be generated using relevant information of at least two TCP packets comprising both payload data and MPTCP/TCP control information (such as sequence numbers required for MPTCP/TCP data flow reconstruction for example). One FEC packet can be sent for every N payload packets. In an example, an FEC packet can be sent for every N payload packets whenever there is space in the TCP congestion window. The receiver can acknowledge data received in order using standard signaling but selective acknowledgments of out-of-order packets whose transmission can trigger proactive retransmission and congestion window reduction by the sender can be sent to the sender if N out-of-order packets are received by the receiver (so-called DupACK threshold in TCP). Furthermore, the congestion window of the sender can be controlled based on the acknowledgments of both FEC and payload packets, but both packet types can have their own sender-side accounting. In an example, an FEC overhead ratio, $I/(N+1)$, can be dynamically adjusted in order to maintain a pre-determined maximum tolerable residual loss rate of payload data.

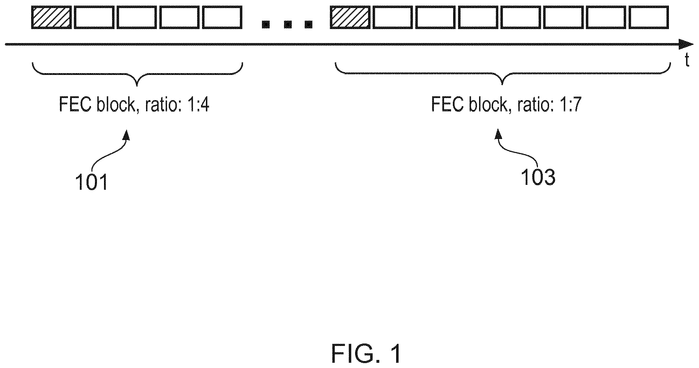

Figure 1 is a schematic representation of an FEC overhead ratio according to an example. More specifically, figure 1 depicts two exemplary FEC overhead ratios: a 1:4 ratio and a 1:7 ratio. That is, as can be seen in block 101, one FEC packet (grey) is sent for every four payload data packets. In block 103, one FEC packet is sent for every seven payload data packets. Accordingly, in a multipath TCP session an error correction packet may be generated using payload data and control information of N TCP packets. In an example, the generated error correction packet can be transmitted as part of a session congestion window along with the N TCP packets such that the congestion window parameter is not exceeded.

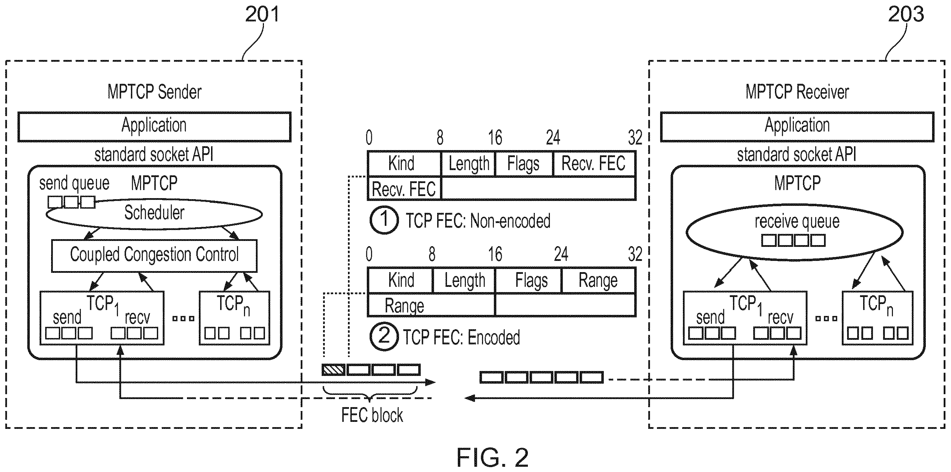

Figure 2 is a schematic representation of a system according to an example. During a TCP three-way handshake between a sending apparatus 201 and a receiving apparatus 203, error correction (EC) capability, such as FEC capability for example, is negotiated between the sender 201 and the receiver 203.

The sender 201 can include the EC-related signalling in the headers of all subsequent packets, marked inside the "Flags" field (①), allowing the receiver 203 to distinguish between encoded EC packets and non-encoded payload packets. In exchange, the receiver 203 can signal using the same "Flags" field to indicate the sufficiency of EC overhead for the recovery of lost/delayed data (signalling ②) as each EC packet can help recover only one payload packet. In an example, all EC signalling takes place in the TCP-level at this stage. EC packets can be generated using the XOR operator characterized by low computational overhead and implementation simplicity.

According to an example, an EC packet can be sent every N TCP segments. This can be executed as part of the congestion window of the sender that determines the number of bytes or packets that can be outstanding at any time and which is a means of stopping a link between the sender and the receiver from becoming overloaded with too much traffic. The data payload packets and EC packets are transmitted taking into account the congestion window.

In order to implement dynamic control of EC overhead to maintain maximum tolerable residual loss rate, the sender 201 can use several types of feedback information to account EC into TCP's congestion control: (1) EC that successfully recovered data, (2) EC that failed recovering data and (3) EC acknowledgements.

In an example, the sender can track EC packets in order to determine whether they are successfully used for error recovery at the receiver or not. If more than one packet is lost within a block, EC is deemed to fail. If EC is successful, then XOR-based EC provides single loss recovery avoiding retransmissions. The sender accounts for EC in the congestion control, i.e., reducing the CWND, only if EC is lost or fails. Similarly, acknowledged EC can trigger an CWND increase in congestion avoidance. In an example, the sender only sends EC if the CWND has space, remaining compliant with TCP's congestion control. The DupACK threshold can be changed to the current EC ratio to avoid early retransmissions. This can also result in the reduction of sender congestion window.

According to an example, EC overhead is controlled so as to bound the residual losses - that is, the amount of packets that need to be retransmitted due to EC failing to recover, i.e. triggering TCP's default loss detection and recovery behaviour tied to RTT. More specifically, the average residual losses over N periods can be taken and compared against a target residual loss rate: If the average link loss rate is higher than the target, the FEC ratio can be reduced, otherwise, it can be increased.

Let:

$$ \mathrm{Residual}_i = \frac{Retransmit}{Total - Retransmit} \qquad (1) $$

identify a particular Residual Loss measurement over an interval of time T, taken from Total and Retransmitted packets. Its average value computed from N samples is computed as:

$$ \overline{\mathbf{Residual}} = \frac{\sum_{n=1}^{N} \overline{\mathrm{Residual}_n}}{N} \qquad (2) $$

for a given N. Also, let RATIO denote the EC overhead, RATIO = I / (P+ I) where P denotes the number of payload packets between two EC packets. Then, for two pre-determined reconfigurable constants TARGET and $\delta$, the FEC overhead RATIO can be updated as follows:

$$ \begin{aligned} &\textbf{if} \quad \overline{\mathbf{Residual}} > \mathtt{target} \quad \textbf{then} \\ &\qquad \mathrm{ratio'} = \mathrm{ratio} \times (1 - \delta) \\ &\textbf{else} \qquad\qquad\qquad\qquad\qquad\qquad (3) \\ &\qquad \mathrm{ratio'} = \mathrm{ratio} \times (1 + \delta) \\ &\textbf{end if} \end{aligned} $$

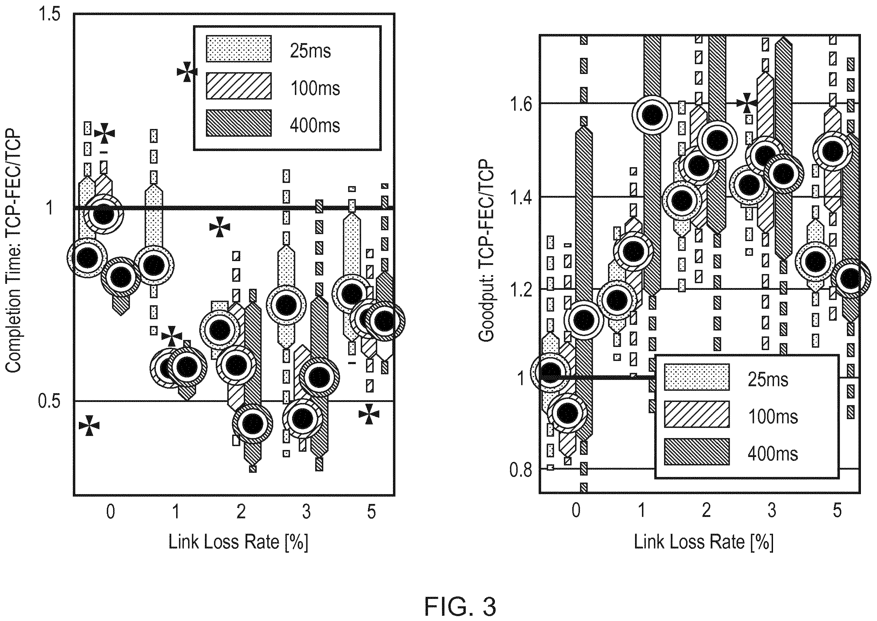

Figure 3 is a set of graphs showing latency and throughput improvements according to an example. More specifically, figure 3 shows performance evaluations in an MPTCP session with dynamic EC for (i) (left hand graph) streaming video latency reduction, and (ii) bulk transfer throughput increase compared to legacy MPTCP as function of link loss rate and connection round-trip time.

As can be seen, on real-life traffic a latency reduction of up to 50% and throughput increase by up to 40% has been observed. There is therefore provided an easy-to-implement practical solution for latency control in high-throughput data transfers while providing systematic integration with legacy transport-layer protocols such as (MP)-TCP.

The present inventions can be embodied in other specific apparatus and/or methods. The described embodiments are to be considered in all respects as illustrative and not restrictive. In particular, the scope of the invention is defined by the appended claims.

**Claims**

1. A method, in a multipath TCP session, comprising:

   for every N multipath TCP packets to be transmitted as part of the session, generating an error correction packet using payload data and control information of the N multipath TCP packets;
   transmitting the generated error correction packet along with the N multipath TCP packets;
   modifying an error correction overhead ratio (101, 103), representing the ratio of error correction packets to N, according to an average payload packet loss rate;
   generating an average payload packet loss rate over a predetermined time interval using measures of the total transmitted payload packets and the total retransmitted payload packets over the interval; and

comparing the average payload packet loss rate to a predetermined threshold value,
wherein the error correction overhead ratio is modified to reduce the ratio when the average payload packet loss rate is greater than the threshold value or to increase the ratio when the average payload packet loss rate is less than the threshold value.

2. A method as claimed in claim 1, further comprising:
transmitting an error correction packet as part of a session congestion window.

3. A method as claimed in any preceding claim, further comprising:
receiving, at a sending apparatus, an acknowledgement of out-of-order packets when N out-of-order packets are received at a receiver.

4. A method as claimed in any preceding claim, further comprising:
at a sending apparatus, modifying a session congestion window based on a number of received error correction packets and payload packet acknowledgements.

5. A system comprising:
a sending apparatus (201) to generate an error correction packet using payload data and control information of N multipath TCP packets to be transmitted from the sending apparatus as part of a multipath TCP session, wherein the sending apparatus is configured to:

transmit the generated error correction packet as part of a session congestion window along with the N multipath TCP packets,
modify an error correction overhead ratio (101 103), representing the ratio of error correction packets to N, according to an average payload packet loss rate; the sending apparatus configured to:

generate an average payload packet loss rate over a predetermined time interval using measures of the total transmitted payload packets and the total retransmitted payload packets over the interval, and
compare the average payload packet loss rate to a predetermined threshold value,
wherein the error correction overhead ratio is modified to reduce the ratio when the average payload packet loss rate is greater than the threshold value or to increase the ratio when the average payload packet loss rate is less than the threshold value.

6. A system as claimed in claim 5, wherein the sending apparatus is configured to receive an acknowledgement of out-of-order packets when N out-of-order packets are received at a receiver (203).

7. A system as claimed in claim 5 or 6, wherein the sending apparatus is configured to modify a session congestion based on a number of received error correction packets and payload packet acknowledgements.

8. A computer program product, comprising instructions which, when the program is executed by a computer, cause the computer to carry out the method of any of claims 1 to 4.


**Patentansprüche**

1. Verfahren in einer Mehrweg-TCP-Sitzung, umfassend:

für alle N Mehrweg-TCP-Pakete, die als Teil der Sitzung übertragen werden sollen, Erzeugen eines Fehlerkorrekturpakets unter Verwendung von Nutzlastdaten und Steuerinformationen der N Mehrweg-TCP-Pakete;
Übertragen des erzeugten Fehlerkorrekturpakets zusammen mit den N Mehrweg-TCP-Paketen;
Modifizieren eines Fehlerkorrektur-Overhead-Verhältnisses (101, 103), das das Verhältnis von Fehlerkorrekturpaketen zu N darstellt, gemäß einer durchschnittlichen Nutzlast-Paketverlustrate;
Erzeugen einer durchschnittlichen Nutzlast-Paketverlustrate über ein vorher bestimmtes Zeitintervall unter Verwendung von Mitteln der insgesamt übertragenen Nutzlastpakete und der insgesamt erneut übertragenen Nutzlastpakete über das Intervall; und
Vergleichen der durchschnittlichen Nutzlast-Paketverlustrate mit einem vorbestimmten Schwellenwert, wobei das Fehlerkorrektur-Overhead-Verhältnis modifiziert wird, um das Verhältnis zu verringern, wenn die durchschnittliche Nutzlast-Paketverlustrate größer als der Schwellenwert ist, oder um das Verhältnis zu erhöhen, wenn die durchschnittliche Nutzlast-Paketverlustrate kleiner als der Schwellenwert ist.

**2.** Verfahren nach Anspruch 1, ferner umfassend:
Übertragen eines Fehlerkorrekturpakets als Teil eines Sitzungsüberlastungsfensters.

**3.** Verfahren nach einem der vorhergehenden Ansprüche, ferner umfassend:
Empfangen, an einer Sendevorrichtung, einer Bestätigung von Paketen außerhalb der Reihenfolge, wenn N Pakete außerhalb der Reihenfolge an einem Empfänger empfangen werden.

**4.** Verfahren nach einem der vorhergehenden Ansprüche, ferner umfassend:
bei einer Sendevorrichtung Modifizieren eines Sitzungsüberlastungsfensters basierend auf einer Anzahl empfangener Fehlerkorrekturpakete und Nutzlastpaketbestätigungen.

**5.** System, umfassend:
eine Sendevorrichtung (201) zum Erzeugen eines Fehlerkorrekturpakets unter Verwendung von Nutzlastdaten und Steuerinformationen von N Mehrweg-TCP-Paketen, die von der Sendevorrichtung als Teil einer Mehrweg-TCP-Sitzung zu übertragen sind, wobei die Sendevorrichtung ausgelegt ist zum:

Übertragen des erzeugten Fehlerkorrekturpakets als Teil eines Sitzungsüberlastungsfensters zusammen mit den N Mehrweg-TCP-Paketen,
Modifizieren eines Fehlerkorrektur-Overhead-Verhältnisses (101 103), das das Verhältnis von Fehlerkorrekturpaketen zu N darstellt, gemäß einer durchschnittlichen Nutzlast-Paketverlustrate;
wobei die Sendevorrichtung ausgelegt ist zum:

Erzeugen einer durchschnittlichen Nutzlast-Paketverlustrate über ein vorher bestimmtes Zeitintervall unter Verwendung von Mitteln der insgesamt übertragenen Nutzlastpakete und der insgesamt erneut übertragenen Nutzlastpakete über das Intervall; und
Vergleichen der durchschnittlichen Nutzlast-Paketverlustrate mit einem vorbestimmten Schwellenwert, wobei das Fehlerkorrektur-Overhead-Verhältnis modifiziert wird, um das Verhältnis zu reduzieren, wenn die durchschnittliche Nutzlast-Paketverlustrate größer als der Schwellenwert ist, oder um das Verhältnis zu erhöhen, wenn die durchschnittliche Nutzlast-Paketverlustrate kleiner als der Schwellenwert ist.

**6.** System nach Anspruch 5, wobei die Sendevorrichtung dazu ausgelegt ist, eine Bestätigung von Paketen außerhalb der Reihenfolge zu empfangen, wenn N Pakete außerhalb der Reihenfolge an einem Empfänger (203) empfangen werden.

**7.** System nach Anspruch 5 oder 6, wobei die Sendevorrichtung dazu ausgelegt ist, eine Sitzungsüberlastung basierend auf einer Anzahl von empfangenen Fehlerkorrekturpaketen und Nutzdatenpaketbestätigungen zu modifizieren.

**8.** Computerprogrammprodukt, umfassend Anweisungen, die, wenn das Programm von einem Computer ausgeführt wird, den Computer veranlassen, das Verfahren nach einem der Ansprüche 1 bis 4 durchzuführen.

**Revendications**

**1.** Procédé, dans une session TCP à trajets multiples, comprenant :

pour chaque tranche de N paquets TCP à trajets multiples à transmettre dans le cadre de la session, la génération d'un paquet de correction d'erreur utilisant des données de charge utile et des informations de commande des N paquets TCP à trajets multiples ;
la transmission du paquet de correction d'erreur généré accompagné des N paquets TCP à trajets multiples ;
la modification d'un rapport de surdébit de correction d'erreur (101, 103), représentant le rapport de paquets de correction d'erreur à N, selon un taux de perte de paquets de charge utile moyen ;
la génération d'un taux de perte de paquets de charge utile moyen sur un intervalle de temps prédéterminé en utilisant des mesures des paquets de charge utile transmis au total et des paquets de charge utile retransmis au total sur l'intervalle ; et
la comparaison du taux de perte de paquets de charge utile moyen à une valeur seuil prédéterminée,
le rapport de surdébit de correction d'erreur étant modifié pour réduire le rapport lorsque le taux de perte de paquets de charge utile moyen est supérieur à la valeur seuil ou pour augmenter le rapport lorsque le taux de perte de paquets de charge utile moyen est inférieur à la valeur seuil.

**2.** Procédé selon la revendication 1, comprenant en outre :
la transmission d'un paquet de correction d'erreur dans le cadre d'une fenêtre de congestion de session.

**3.** Procédé selon l'une quelconque des revendications précédentes, comprenant en outre :
la réception, au niveau d'un appareil d'envoi, d'un accusé de réception de paquets désordonnés lorsque N paquets désordonnés sont reçus au niveau d'un récepteur.

**4.** Procédé selon l'une quelconque des revendications précédentes, comprenant en outre:
au niveau d'un appareil d'envoi, la modification d'une fenêtre de congestion de session sur la base d'un nombre de paquets de correction d'erreur reçus et d'accusés de réception de paquets de charge utile.

**5.** Système, comprenant :
un appareil d'envoi (201) pour générer un paquet de correction d'erreur utilisant des données de charge utile et des informations de commande de N paquets TCP à trajets multiples à transmettre depuis l'appareil d'envoi dans le cadre d'une session TCP à trajets multiples, l'appareil d'envoi étant configuré pour :

transmettre le paquet de correction d'erreur généré dans le cadre d'une fenêtre de congestion de session avec les N paquets TCP à trajets multiples,
modifier un rapport de surdébit de correction d'erreur (101, 103), représentant le rapport de paquets de correction d'erreur à N, selon un taux de perte de paquets de charge utile moyen ;
l'appareil d'envoi étant configuré pour :

générer un taux de perte de paquets de charge utile moyen sur un intervalle de temps prédéterminé en utilisant des mesures des paquets de charge utile transmis au total et des paquets de charge utile retransmis au total sur l'intervalle, et
comparer le taux de perte de paquets de charge utile moyen à une valeur seuil prédéterminée,
le rapport de surdébit de correction d'erreur étant modifié pour réduire le rapport lorsque le taux de perte de paquets de charge utile moyen est supérieur à la valeur seuil ou pour augmenter le rapport lorsque le taux de perte de paquets de charge utile moyen est inférieur à la valeur seuil.

**6.** Système selon la revendication 5, dans lequel l'appareil d'envoi est configuré pour recevoir un accusé de réception de paquets désordonnés lorsque N paquets désordonnés sont reçus au niveau d'un récepteur (203).

**7.** Système selon la revendication 5 ou 6, dans lequel l'appareil d'envoi est configuré pour modifier une congestion de session sur la base d'un nombre de paquets de correction d'erreur reçus et d'accusés de réception de paquets de charge utile.

**8.** Produit de programme informatique, comprenant des instructions qui, lorsque le programme est exécuté par un ordinateur, amènent l'ordinateur à exécuter le procédé selon l'une quelconque des revendications précédentes 1 à 4.

FEC block, ratio: 1:4

FEC block, ratio: 1:7

101

103

FIG. 1

FIG. 2

EP 3 389 206 B1

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140341023 A1